(19) Europäisches Patentamt

European Patent Office

Office européen des brevets

(11) **EP 1 065 838 A2**

(12) **EUROPÄISCHE PATENTANMELDUNG**

(43) Veröffentlichungstag:
**03.01.2001 Patentblatt 2001/01**

(51) Int. Cl.[7]: **H04L 12/56**, H04Q 7/22

(21) Anmeldenummer: **00111521.1**

(22) Anmeldetag: **29.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.06.1999 DE 19929800**

(71) Anmelder:
**SIEMENS AKTIENGESELLSCHAFT
80333 München (DE)**

(72) Erfinder: **Hahn, Wolfgang
16562 Bergfelde (DE)**

(54) **Prepaid-Service für mobile Paketdatennetze**

(57)     Die Erfindung bezieht sich auf ein Verfahren zur Behandlung eines Datendienstes, bei dem von einer ersten, insbesondere mobilen Kommunikationseinrichtung (MS) Daten über zumindest einen Teil eines Kommunikationssystems als Paketdaten übermittelt werden und bei dem eine Verrechnung von Gebühren für den Datendienst erfolgt.

Erfindungsgemäß werden die Gebühren mit einem im voraus entrichteten Gebührenbetrag verrechnet, dies insbesondere parallel zur Paketdatenübertragung, wobei die Gebührenverrechnung abhängig von der übermittelten Datenmenge oder Anzahl der übermittelten Datenpakete als Vorauszahlungs-On-Line-Verrechung erfolgt.

Die Erfindung betrifft insbesondere die Einbettung dieser Funktion in ein existierendes Gebührenvorauszahlungssystem für nicht paketorientierte Kommunikation mit der Möglichkeit einer einheitlichen Abrechnung des Teilnehmers für alle seiner Dienste.

Fig. 1

EP 1 065 838 A2

**Beschreibung**

Die Erfindung betrifft ein Verfahren zur Behandlung, insbesondere zur Gebührenverrechnung eines Datendienstes gemäß den oberbegrifflichen Merkmalen des Patentanspruchs 1 und ein Kommunikationssystem zum Ausführen des Verfahrens.

Für verbindungsorientierte Kommunikationsdienste in einem Kommunikationsnetz ist es bekanntlich möglich, die Verbindungen durch ein Intelligentes Netz (IN) steuern zu lassen. So ist beispielsweise für Mobilfunknetze nach dem GSM-Standard (Global System for Mobile Communication) eine CAMEL-Plattform (Customized Applications for Mobile network Enhanced Logic) gemäß der GSM-Empfehlung 03.78 definiert, um eine weltweite Nutzung der Leistungsmerkmale des Intelligenten Netzes zu ermöglichen. Die übliche Architektur des Intelligenten Netzes sieht eine Dienstevermittlungsfunktion (Service Switching Function) und eine Dienstesteuerungsfunktion (Service Control Function) vor, die über eine Signalisierungsstrecke miteinander verbunden sind. Als Applikation wird hierbei ein spezielles Protokoll verwendet, das für das Mobilfunknetz aus dem CAP-Protokoll (CAMEL Application Part) besteht.

In bestehende Mobilfunknetze nach dem GSM-Standard werden derzeit neuartige Datendienste wie der Paketdatendienst GPRS (General Packet Radio Service) gemäß der GSM-Empfehlung 03.60 eingeführt. Die Übertragung im Mobilfunknetz findet hierbei nicht verbindungsorientiert, sondern in Form von Paketdaten statt. Diese Art der Übertragung nutzt die gegebenen Übertragungsressourcen im Mobilfunknetz besser aus. Mit diesem GPRS-Netz ist es ebenfalls möglich, Kurzmitteilungen (SMS) zu übertragen. Die Architektur für den Paketdatendienst geht davon aus, daß das vom mobilen Teilnehmer benutzte Kommunikationsendgerät - die Mobilstation an ihrem jeweiligen Aufenthaltsort von einem Dienstenetzknoten (Serving GPRS Support Node - GPRS: General Packet Radio System) bedient wird. Um Paketdaten zu empfangen oder zu senden, ist der Zugang zu einem Paketdatennetz notwendig. Zu diesem Zweck werden Zugangsnetzknoten (Gateway GPRS Support Nodes) bereitgestellt, die jeweils den Zugang zu dem Paketdatennetz - z.B. Internet - realisieren und ein bestimmtes Paketdatenprotokoll - z.B. Internet Protokoll - unterstützen. Zwischen dem Dienstenetzknoten und dem Zugangsnetzknoten ist im Mobilfunknetz ein Tunnel vorgesehen, über den die Pakete übertragen werden. Da sich die mobilen Teilnehmer mit ihren Kommunikationsendgeräten zwischen mehreren Funkversorgungsgebieten eines Mobilfunknetzes bewegen, gelangt der einzelne Teilnehmer möglicherweise in das Versorgungsgebiet eines neuen Dienstenetzknotens, so daß der Tunnel umzuschalten ist und die Pakete auf einem neuen Übertragungsweg durch das Mobilfunknetz zu übertragen sind. Der bisherige Dienstenetzknoten kann den Paketdatendienst für den betreffenden Teilnehmer für diesen Fall nicht mehr steuern.

Ausgehend von der Behandlung eines Paketdatendienstes im Mobilfunknetz durch Dienstenetzknoten in Verbindung mit einem Zugangsnetzknoten zur Übertragung von Paketdaten sowie einer Tunnelumschaltung bei Wechsel des Versorgungsgebiets erfolgt gemäß der älteren Patentanmeldung P19849578.1 ein Interworking des Paketdatendienstes mit Netzfunktionen eines Intelligenten Netzes, von denen eine Dienstevermittlungsfunktion mit dem jeweiligen Dienstenetzknoten zusammengeschaltet und eine Dienstesteuerungsfunktion über eine Schnittstelle an den Dienstenetzknoten mit integrierter Dienstevermittlungsfunktion angeschaltet wird, sowie - bei dem Wechsel des mobilen Teilnehmers von dem einen Versorgungsgebiet in das andere Versorgungsgebiet zusätzlich zum Umschalten von dem einen Tunnel zu dem anderen Tunnel ein Umschalten von einer alten Assoziation, die zwischen der im bisherigen Dienstenetzknoten integrierten Dienstevermittlungsfunktion und der Dienstesteuerungsfunktion besteht, zu einer neuen Assoziation, die zwischen der im neuen Dienstenetzknoten integrierten Dienstevermittlungsfunktion und der Dienstesteuerungsfunktion besteht.

Durch die Kombination von Integration der Dienstevermittlungsfunktion in den jeweiligen Dienstenetzknoten, Kommunikation mit der Dienstesteuerungsfunktion, Umschalten von alter Assoziation zu neuer Assoziation zusätzlich zum Umschalten des Tunnels für die Paketdatenübertragung, läßt sich in vorteilhafter Weise der Paketdatendienst wie andere IN-Dienste behandeln und steuern sowie - unbemerkt und störungsfrei - für den mobilen Teilnehmer bei einem Wechsel des Versorgungsgebiets durch Anwendung von IN-Funktionen weiterhin zur Verfügung stellen.

Weiterhin ist die Möglichkeit einer Vorausbezahlungs- bzw. Prepaid-online-Vergebührung für Teilnehmer eines mobilen Netzes bekannt, bei der Sprachendienste eines Teilnehmers mit einem On-Line-Konto vergebührt werden.

In der GSM-Standardisierung ist eine neue Schnittstelle (Interface) zwischen dem Paketnetzknoten (SGSN) und einem Ab-rechnungsserver (SCP) mit neuen Parametern und Funktionen vorgesehen (CAMEL Phase 3). Diese bietet jedoch derzeit noch keine speziell realisierbare Lösung für eine Vergebührung von Paketdiensten oder Sprach- und Paketdiensten eines Teilnehmers mit einem On-Line-Konto.

Der Erfindung liegt die Aufgabe zugrunde, Verfahren und Funk-Kommunikationssysteme bereitzustellen, bei denen die Abrechnung von Diensten eines (mobilen) Paketnetzes erweitert wird. Vorteilhafterweise sollen die Erweiterungen für die Dienste- bzw. Service-Logik des Abrechnungsservers (SCP) und den Paketnetzknoten (SGSN) dabei begrenzt sein.

Diese Aufgabe wird durch das Verfahren mit den Merkmalen des Anspruchs 1 und das Funk-Kommunikationssystem mit den Merkmalen des Anspruchs 16 gelöst.

Vorteilhafte Weiterbildungen sind Gegenstand von Unteransprüchen.

Hier werden zwei Ideen miteinander verbunden: Einerseits wird ein Paketdienst wie das Internet für den Versand von Paketdaten genutzt und andererseits wird die Vergebührungslogik in Anlehnung an die vom kontinuierlichen verbindungsorientierten Dienst her bekannte Vergebührungslogik so angepaßt, daß nur ein minimaler Aufwand und somit minimale Kosten anfallen.

Dazu werden nur Funktionen eines Paketnetzes auf Funktionen eines leitungsvermittelten Netzes abgebildet, ein Gebührenanpassungs-Server eingeführt und IP-basierte Protokolle im GSN anstelle vom Common Channel Signaling System No. 7 (CCSNo7) genutzt.

Somit wird ein Gebührenanpassungs-Server (CMS) an existierende Schnittstellen des Paketnetzes angeschlossen, wo er eine Protokollumsetzung auf die entsprechende Schnittstelle des leitungsvermittelten Prepaidsystems durchführt. Die Implementierung neuer Schnittstellen kann dabei vermieden werden. Weiterhin ist die Ersetzung von CCSNo7-Protokollen durch IP-basierte Schnittstellen / Protokolle bzw. die Verlagerung der GSM-CAMEL-Schnittstelle vom Paketnetzknoten auf den Gebührenanpassungs-Server möglich.

Gleichzeitig kann im CMS ein Gebühren-Äquivalent des leitungsvermittelten Services berechnet und der Service somit lückenlos in die existierende Umgebung des Prepaidsystems integriert werden. Die Vorteile die sich daraus ergeben sind insbesondere die einfache Realisierung im Netzwerk, da die bestehenden Komponenten kaum modifiziert werden müssen.

Am GSN ist keine Abrechnungsserver-Schnittstelle (INAP/CAP) erforderlich. Zudem muß keine neue Servicelogik im Prepaid-System (SCP) bereitgestellt werden bzw. es sind nur geringe Modifikationen durchzuführen.

Im GPRS-Serviceknoten (GSN) müssen keine Tarifdaten administriert und behandelt werden.

Für den Operator ergibt sich eine einfache Administration. So bleibt die Teilnehmerdatenbasis zentral im Abrechnungsserver/Heimatregister (SCP/HLR). Im CMS müssen nur die Tarifmodelle und keine Teilnehmerdaten administriert werden.

Nachfolgend werden Ausführungsbeispiele anhand der Zeichnung näher erläutert. Es zeigen:

Fig. 1  die Einbindung eines neuen Gebührenanpassungs-Servers in die Netzwerkstruktur für die Realisierung der Vergebührungsfunktion,

Fig. 2  eine mögliche Schnittstelle für die Kontroll-/ Auslösefunktion und

Fig. 3  eine beispielhafte Konfiguration einer Realisierung mit einer Multivendormöglichkeit, d.h. einer Standardisierungsmöglichkeit.

Nachfolgend wird der Ablauf der On-Line-Vergebührung eines beispielhaften GPRS-Dienstes (GPRS: General Packet Radio System) beschrieben. Dabei werden im wesentlichen zwei Aufgaben realisiert:

Erstens erfolgt bei oder nach einer Nutzung des GPRS-Dienstes eine entsprechende Abbuchung von einem Online-Konto, die nachfolgend als Vergebührungsfunktion (Charging Funktion) bezeichnet wird.

Zweitens erfolgen bei Kontolimitunterschreitungen insbesondere auch Maßnahmen, wie z.B. der Entzug der Serviceberechtigung (nachfolgend Kontroll-Funktion).

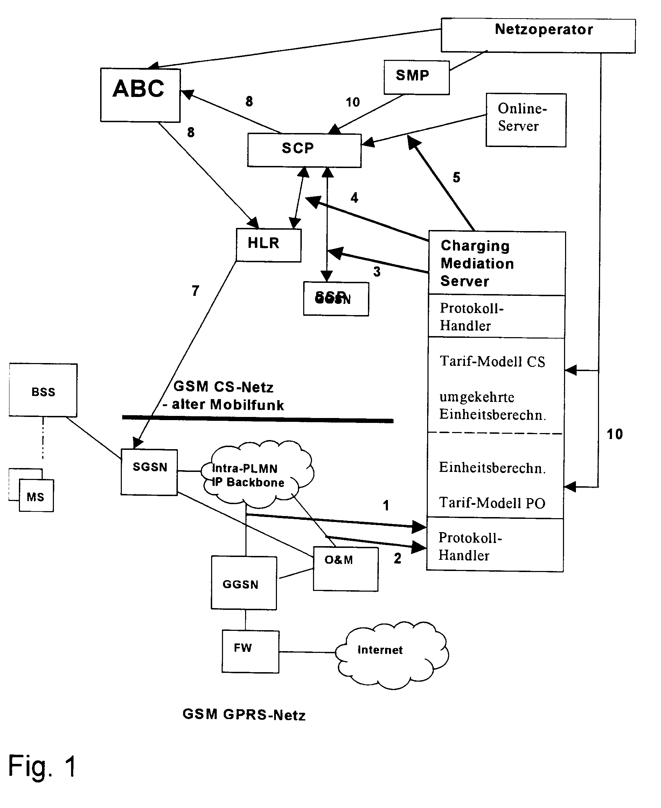

Die Vergebührungsfunktion wird anhand der Fig. 1 verdeutlicht, die eine für deren Realisierung geeignete Einbindung eines Gebührenanpassungs-Servers bzw. Charging Mediation Servers (CMS) in die Netzwerkstruktur darstellt.

Der obere und linke Abschnitt aus Fig. 1 stellt das für sich bekannte GSM-Mobilfunksystem für leitungsvermittelte Verbindungen dar, der untere Abschnitt den so im wesentlichen bereits für Paketdatendienste und den Anschluß an das Internet bestehenden Teil. Neu hinzugekommen ist der Gebührenanpassungs-Server CMS, der die Hauptschnittstelle zwischen diesen beiden Systemen bildet.

Im oberen Abschnitt kommuniziert der Gebührenanpassungs-Server CMS (Charging Mediation Server) mit einem zentralen Abrechnungsserver SCP (Service Control Point) über Verbindungen 3, 4 bzw. 5 zwischen diesem und einem Online-Server, einem SSP und einem Heimatregister HLR (Home Location Register), das zur Registrierung des Aufenthaltsortes einer Mobilstation dient. Der Abrechnungsserver SCP dient zur Offline-Vergebührung nach einem Gespräch oder zur Online-Vergebührung. Bei der Online-Vergebührung wird bereits während eines Gesprächs eine Abbuchung vom Online-Konto vorgenommen. Der Abrechnungsserver SCP steht weiterhin (über 8) mit einem Verwaltungs- und Verrechnungszentrum ABC (Administration and Billing Center) und (über 10) mit einem SMP (Service Management Point) in Verbindung, auf den wiederum vom Netzoperator zugegriffen werden kann. Der Netzoperator ist über eine Verbindung 10 mit dem Gebührenanpassungs-Server CMS verbunden.

Das Heimatregister HLR steht über eine Verbindung 7 auch mit einem Dienstenetzknoten SGSN (Serving GPRS Service Node) in Verbindung, der anstelle einer Mobilvermittlungsstelle eine oder mehrere Mobilstationen MS über ein zwischengeschaltetes Basisstationssystem BSS an ihrem momentanen Aufenthaltsort bedient.

Im unteren Abschnitt ist das Internet über eine Zugangskontrolleinrichtung (FW: Firewall) an den Internet-Gateway-Zugangsnetzknoten GGSN (Gateway GPRS Support Node) angeschlossen. Der Gateway-Zugangsnetzknoten GGSN kommuniziert zudem mit einem INTRA-PLMN-IP-Backbone (PLMN-internes IP-Netz) und einem Betriebs- und Wartungssystem O & M (Operation & Maintanance) sowie darüber auch mit dem GebührenanpassungsServer CMS. Das INTRA-PLMN-IP-Backbone und das O & M- kommunizieren zudem auch mit dem Dienstenetzknoten SGSN.

Der beide Abschnitte übergreifende Gebührenanpassungs-Server CMS besteht aus mehreren Einheiten, die im Rahmen der speziellen Funktionen erläutert werden.

Die fett gedruckten Pfeile bzw. Verbindungen 1 - 10 bezeichnen existierende Schnittstellen bzw. Interfaces, die als Kandidaten für die hier umzusetzende Nutzung dienen. Dabei kann jeweils die für die konkrete Umgebung günstigste Schnittstelle ausgewählt werden.

1. Liefern von Gebühreninformationen an den Gebührenanpassungs-Server CMS:

Die Vergebührungs-Information wird in den Zugangsnetzknoten GSNs in Datensätze bzw. Rekords formatiert und über einen "hot exit" bzw. zeitlich unmittelbaren Zugang an den Gebührenanpassungs-Server CMS geschickt. Hierfür kann auch ein Dateiübertragungsprotokoll bzw. File Transfer Protokoll (FTP - warm billing) angewendet werden. Dabei kann eine auf einem Internet-Protokoll IP basierende Schnittstelle wie z.B. das IP-Backbone (1) genutzt werden, oder ein O&M-Netzwerk mit z.B. Q3-Interface (2). Wenn die Vorausbezahlungs- bzw. Prepaid-Teilnehmer über die Anmelde- bzw. Subscription Daten im SGSN gekennzeichnet sind (Schnittstelle 7), ist es möglich nur deren Rekords an den Gebührenanpassungs-Server CMS zu liefern.

2. Verarbeitung der empfangenen Daten im Gebührenanpassungs-Server CMS und Berechnung einer On-Line-Gebühr (Gebühreneinheiten):

Der Gebührenanpassungs-Server CMS enthält eine erste Tarifdatenbank (PO) für eine Vergebührung von Diensten im Paketnetz und eine zweite Tarifdatenbank (CS), welche die Tarifstruktur für leitungsvermittelte Dienste enthält und welche der im bekannten Abrechnungsserver SCP entspricht. Diese Datenbasen können durch den Operator über die O&M-Schnittstelle (10) eingegeben werden. Alternativ kann natürlich auch eine einzige, entsprechend umfangreich strukturierte Datenbank eingesetzt werden.

Aus den empfangenen Vergebührungs-Datensätzen (Rekords) werden durch den Protokollhandler die relevanten Informationen an den Gebührenberechner (Unit calculator) übergeben. Dieser ermittelt die Gebühr (Units) entsprechend des Tarifmodells,

z.B. $U[\text{Gebühren}] = a \times \text{Datenvolumen}[KByte] + b \times \text{Verbindungsdauer}[min] + c \times \text{PDP-Context-Activation}[1/0]$.

Dabei stellt die PDP-Context-Activation die Herstellung der logischen Verbindung aus dem GPRS/Mobilfunknetz in ein Paketnetz mit der Möglichkeit dar, danach Pakete zu übertragen. Eine Paketverbindungsaktivierung (PDP context activation) kann äquivalent zu einer Leitungsverbindung zwischen zwei Stationen (call) betrachtet werden, wodurch letztendlich bestimmt wird, wo und wie ein Teilnehmer erreichbar ist. Im Paketdienst wird so gesehen ein logischer Draht zwischen Mobilstationen und einem Paketnetz eingerichtet.

Für die Vergebührung von SMS kann die einfache Berechnung z.B. $U[\text{Gebühren}] = d$ (je gesendete SMS) verwendet werden.

3. Ausgabe der relevanten Information an das On-Line-Prepaidsystem und Bestimmung eines Vergebührungs-Äquivalents im Leitungsvermittlungs-Tarifmodel entsprechend dem gewählten Interface:

Der Protokollhandler in Richtung des Vorausbezahlungssystems simuliert Ereignisse (events) im circuit switched bzw. leitungsvermittelten Netzwerk, die zu einer definierten Vergebührungsaktion im Abrechnungsserver SCP führen. Dabei kann die zweite Tarifdatenbank CS angewendet werden.

Um Nebeneffekte zu vermeiden, können die Protokolloperationen der entsprechenden Schnittstelle auch so modifiziert oder entworfen werden, daß sie reine Vergebührungsoperationen enthalten, falls diese nicht bereits schon existieren (z.B. für die direkte Reduzierung eines Zeit- oder Gebührenkontos um einen bestimmten Betrag).

Auf Grundlage der in den Datensätzen enthaltenen Information kann auch das Zustandsmodell (State Model) der Sitzungen (Sessions) im Dienstenetzknoten SGSN nachgebildet werden. Damit ist es möglich, das CAMEL-Protokoll im Gebührenanpassungs-Server CMS zu terminieren. Für diese Funktion sollten die im Schritt 1 übertragenen Datensätze vorzugsweise erweitert werden, um die Erzeugung eines Rekords beim PDP-Context-Aufbau zu ermöglichen. Weiterhin sollte im Rekord der Parameter SCP-Adresse zur Auswahl des Abrechnungsservers SCP enthalten sein.

Nachfolgend werden einige Beispiele für nutzbare Interfaces zur Übertragung von Gebühreninformationen zwischen dem CMS und dem Abrechnungsserver aufgeführt:

A1) INAP/CAP-Schnittstelle (3):

Eine Möglichkeit ist ein CAMEL-Protokoll für leitungsvermittelte Verbindungen (CS): Dabei erfolgt eine Berechnung einer bestimmten Rufdauer, welche in einem simulierten Dialog vom Teilnehmerkonto abgezogen wird.

Eine andere Möglichkeit ist das CAMEL-Protokoll für GPRS im CMS zu unterstützen.

Um die CAMEL-Operationen vollständig unterstützen zu können, sind auch die entsprechenden Kontollfunktionen mit CAMEL zu realisieren und über das GPRS Vergebührungs-Protokoll (Schnittstelle/Interface 1) in Echtzeit zum Dienstenetzknoten SGSN zu signalisieren.

A2) MAP-(Mobile Application Protocoll)-Schnittstelle (4):

Es erfolgt eine Berechnung einer Anzahl von vergebührbaren Ereignissen (wie USSD, Supplementary Service Usage), welche dem SCP signalisiert werden.

A3) Online-Schnittstelle, z.B. IP-basierte Schnittstelle zum Kontoaufladen (5):

- Proprietär definierte Nachrichten mit Vergebührungsinformationen werden an den Abrechnungsserver SCP geschickt.

- Die Gebühren werden als negative Kontostandserhöhung an den Abrechnungsserver SCP weitergegeben.

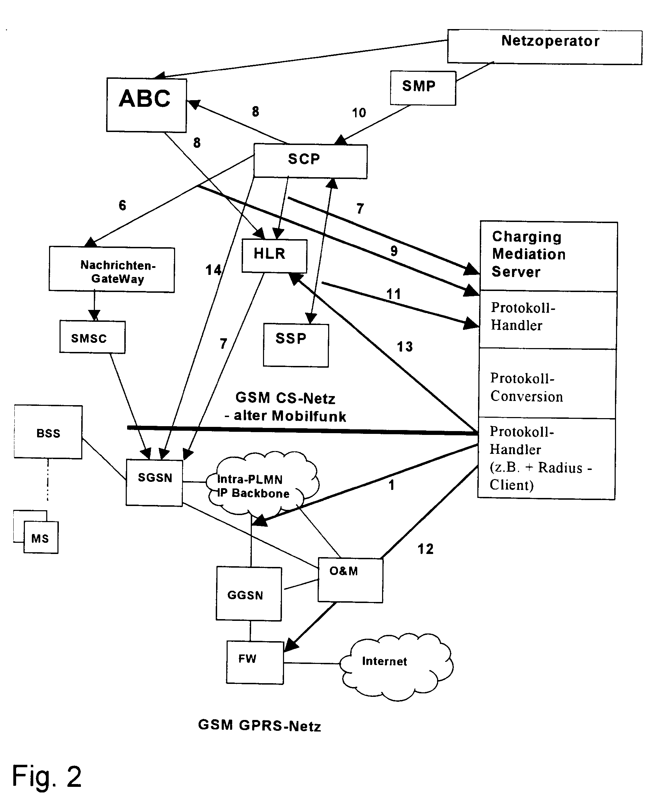

Nachfolgend wird die Behandlung von Kontolimitunterschreitung unter Bezug auf Fig. 2 beschrieben, die mögliche Schnittstellen für die Kontroll-/Auslösefunktion darstellt. Im Vergleich zu Fig. 1 sind hier der Online-Server weggelassen und ein Nachrichten- bzw. Kurzmitteilungs-Gateway sowie ein Kurzmitteilungszentrum SMSC über eine Verbindung bzw. eine Schnittstelle 6 hinzugefügt. Die einzelnen Verbindungen sind angelegt, wie dies anhand der nachfolgenden Beispiele dargelegt wird.

Das System sollte hier in der Lage sein, das Erreichen eines Kontostandslimits an den Teilnehmer zu signalisieren. Dazu kann das Interface bzw. die Schnittstelle 6 zu einem Nachrichten-Gateway verwendet werden, um Kurzmitteilungen an den Teilnehmer auszusenden.

Für den Fall einer Schwellwertunterschreitung muß dem Teilnehmer die Berechtigung für weitere Dienstleistungen und Dienste entzogen werden. Außerdem müssen aktuelle PDP-Contexte beendet werden. Um die GPRS-Subscription bzw. GPRS-Anmeldung zu entziehen, kann der Abrechnungsserver SCP entsprechende Datensätze (über 8) an das Verwaltungs- und Verrechnungszentrum ABC schicken.

Für die Verhinderung der aktuellen Nutzung von GPRS-Diensten können verschiedene Schnittstellen verwendet werden, z.B.:

vom Abrechnungsserver SCP zum Gebührenanpassungs-Server CMS:

B1) Internet-Protokoll-IP-basierte On-line-Schnittstelle 9

B2) CAMEL-Interface/Schnittstelle 11

B3) MAP-Interface 7 (Mobile Application Part - Steuerung der Mobilitätsfunktion)

vom Gebührenanpassungs-Server CMS zum Dienstenetzknoten SGSN:

B4) O&M-Schnittstelle zum Heimatregister HLR (CMISE oder herstellerspezifisch) 13

B5) GPRS-Tunnel-Protokoll/Vergebührungs-Protokoll 1

Zur Steuerung der SGSN-PDP-Kontexte ist eine Erweiterung des Protokolls mit Steuernachrichten/-Rekords vorzunehmen (externes 'Delete PDP Context Request'). Unabhängig ob der Gebührenanpassungs-Server CMS als Protokollabschluß für das CAMEL Protokoll dient (Variante A1+B2) oder ein IP-basiertes Protokoll verwendet wird (A3+B1) kann durch eine Erweiterung dieses Protokolls die CAMEL Funktionalität vollständig ausgebildet werden.

B6) Screening-Funktion bzw. Musterbeobachtungsfunktion auf Basis der IP-Adresse 12:

Bei statischen IP-Adressen kann der Abrechnungsserver SCP die IP-Adresse der bedienten Mobilstation liefern. Bei dynamischen Adressen ist eine Implementierung möglich, wenn im Gateway-Zugangsnetzknoten GGSN die IP-Adressen z.B. zentral über einen Radius Server vergeben werden. Der Gebührenanpassungs-Server CMS kann dann ebenfalls über das Datenübertragungsprotokoll Radius (Remote authentication dial in user service) die Adresse beziehen. Danach wird über SNMP (Simple Network Management Protocol) ein Update der Screening-Funktionen (z.B. in den Fire Walls) durchgeführt (über 12), so daß Pakete mit der ermittelten IP- Ziel- bzw. Ursprungsadresse zu verwerfen sind. Durch diese Lösung ist es zwar möglich, den Teilnehmer von GPRS-Diensten auszuschließen, nicht aber Verkehr bzw. Traffic auf der Luftschnittstelle (Air-Interface) zu unterdrücken.

Für eine direkte Abrechnungsserver zu Dienstenetzknoten-Schnittstelle-(SCP-SGSN-Interface)-ohne-Gebührenanpassungs-Server-CMS-Interworking gibt es die Beispiele:

B7) Mobilitätsfunktionssteuerungs-(MAP)-Erweiterung im Abrechnungsserver SCP über die Schnittstelle 14.

B7.1) Bei Kontounterschreitung schickt der Abrechnungsserver SCP parallel zur Nachricht an das ABC/HLR eine entsprechende MAP-Mitteilung ("cancel location...") an den Dienstenetzknoten SGSN.

B7.2) Als Variante ist der Weg über das Heimatregister HLR möglich. Der Abrechnungsserver SCP schickt eine MAP-Nachricht an das Heimatregister HLR, welches daraufhin eine Löschung des Teilnehmers im Dienstenetzknoten SGSN durchführt und dem Teilnehmer die weitere Dienstberechtigung entzieht.

In diesen Fällen der Beispiele B7 soll ein Wiedereinbuchen des Teilnehmers verhindert werden. Mit der Funktionalität von CAMEL PH3 (any time modification) kann über das MAP-Interface direkt auf die Teilnehmerdaten im Heimatregister HLR Einfluß genommen werden und damit eine Sperrung der Subscription bzw. Anmeldung erreicht werden.

B8) Nutzung des Kurznachrichtendienstes SMS über Schnittstelle 6:

Um die Generierung einer MAP-Nachricht im Abrechnungsserver SCP vermeiden zu können, kann die Verwendung von einem Kurznachrichtendienst SMS untersucht werden. Ein spezieller Parameter im Kurznachrichtendienst SMS (der dem Teilnehmer das Ende des GPRS-Services mitteilt) dient dabei als Trigger für den Dienstenetzknoten SGSN, die PDP-Contexte zu schließen und keine neuen zuzulassen. Hierfür kann auch eine Funktionalität im Kurzmitteilungszentrum SMSC einbezogen werden (Verwendung vom User Header Information Identifier der SMS). Für den Dienstenetzknoten SGSN stellt dies jedoch eine proprietäre Erweiterung dar.

Ein Nachteil dieses Beispieles B8 besteht darin, daß ein neues Einbuchen (Attachment) des Teilnehmers nur im aktuellen Dienstenetzknoten-Bereich verhindert werden kann.

Weiterhin gibt es Realisierungsbeispiele mit gleichzeitiger Untersuchung der Multivendormöglichkeit, wie folgt:

a) Vergebührungsfunktion

Um den Einfluß der Vorbezahlungs-Lösung auf die Off-Line-Rechnungslegung (Billing) so gering wie möglich zu halten und im Gebührenanpassungs-Server CMS die Anfrage der Teilnehmerdatenbasis einzusparen, ist die Kennzeichnung der Vorbezahlungs- bzw. Prepaid-Teilnehmer im Dienstenetzknoten SGSN eine wichtige Forderung. Das kann durch die CSI (CAMEL Subscription Information) realisiert werden. Da eine derartige Umsetzung bereits für die CAMEL Phase3 vorgeschlagen ist und in Analogie zu den leitungsvermittelten Diensten CS erfolgen soll, kann diese Erweiterung der MAP-Schnittstelle als Vorgriff auf den Standard und de facto als dem Standard konform angesehen werden. Die Versorgung des GebührenanpassungsServers CMS mit Vergebührungsdateien über das gängige Dateiübertragungsprotokoll FTP wäre eine proprietäre aber einfache Lösung (Interface 2).

Für die Schnittstelle 1 (GPRS Backbone) kann das Vergebührungs-Protokoll entsprechend GSM TS 12.15 angewendet werden. Damit entspricht der Gebührenanpassungs-Server CMS einer Ausprägung der Vergebührungs-Gatewayfunktion CGF (Charging Gateway Funktion) und kann als standardisiert (multivendorfähig) angesehen werden. Die einzige Zusatzfunktion für den Dienstenetzknoten SGSN ist für PDP-Context-Dateien bzw. Records für die Nutzung des GSM Kurzmitteilungsdienstes (SMS) eines CSI-Teilnehmers als Vergebührungs-Gatewayadresse (CG-Adresse) die des Gebührenanpassungs-Servers CMS auszuwählen.

Für eine einfache Realisierung des Gebührenanpassungs-Servers CMS ist der Verzicht auf einen CCSNo7 Stack und die ausschließliche Verwendung IP-basierter Protokolle vorteilhaft. Daher sollte zur Kommunikation mit dem Abrechnungsserver SCP (Service Control Point) das IP-basierte Online-Interface (5) verwendet werden.

Für die SCP-Charging-Funktion gibt es zwei Alternativen:

Der Gebührenanpassungs-Server CMS berechnet die Kosten in Form von Gebühren oder Dauern und schickt diese Daten an den Dienste-Steuerpunkt SCP. Dann wären nur die Gebühren, die Teilnehmerkennung und eventuell die IP-Adresse sowie die Dienstenetzknoten-SGSN-Adresse (B7) zu übertragen.

Falls die Dienste-Logik des SCP bereits entsprechend CAMEL PH3 ein paketorientiertes Tarifmodell realisiert, wäre die Aufgabe des Gebührenanpassungs-Servers CMS noch das Dateihandling bzw. Filehandling, das Auspacken der Datensätze und das Zusammenstellen der vergebührungs-relevanten Parameter in einem intern definierten Mitteilungsformat (IMSI, Dauer, Datenvolumen, eventuell IP-Adresse,...), welches an die Schnittstelle 5 übergeben wird. Die Tarifdaten würden dann über die Schnittstelle 10 direkt im Abrechnungsserver SCP administriert werden.

b) Kontroll-Funktion

Die Zeit vom Feststellen der Kontolimitunterschreitung bis zum Sperren des Teilnehmers für den GPRS-Zugriff sollte möglichst kurz gehalten werden.

Es können Varianten mit Einbeziehung des Gebührenanpassungs-Servers CMS und mit direkter Steuerung durch den Abrechnungsserver / Dienste-Steuerpunkt SCP unterschieden werden. Bei den Funktionen die im Gebührenanpassungs-Server CMS ausgeführt werden, können die Verwaltung bzw. Administration der Subscriber-Daten im Heimatregister HLR (B4) und die Einwirkung auf das GPRS-Netz unterschieden werden (Unterdrückung der Sessions).

Eine standardisierte Möglichkeit zum Sperren des Teilnehmers bietet die MAP-Schnittstelle (siehe B7). Wenn der Gebührenanpassungs-Server CMS nur IP-basierte Protokolle unterstützt, ist eine direkte Unterstützung der MAP-Nachrichten durch den Abrechnungsserver SCP in diesem Fall günstiger.

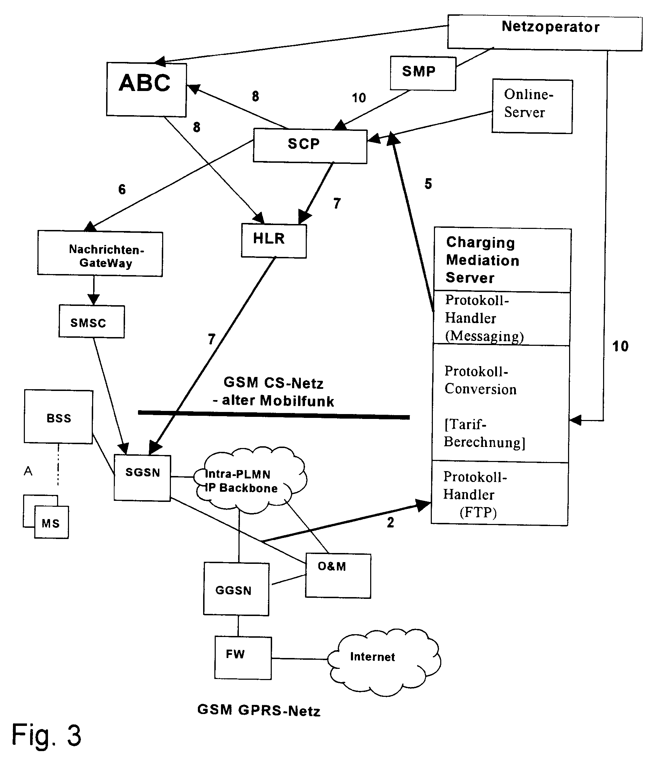

Damit ergibt sich die Beispiel-Konfiguration der Fig. 3.

**Patentansprüche**

1. Verfahren zur Behandlung eines Datendienstes, bei dem von zumindest einer ersten Kommunikationseinrichtung (MS) Daten über zumindest einen Teil eines Kommunikationssystems als Paketdaten übermittelt werden und bei dem eine Verrechnung von Gebühren für den Datendienst erfolgt,
dadurch gekennzeichnet,
daß die Gebühren mit einem im voraus entrichteten oder freigegebenen Gebührenbetrag insbesondere parallel zur Paketdatenübertragung verrechnet werden.

2. Verfahren nach Anspruch 1, bei dem
die Gebührenverrechnung als Vorauszahlungs-On-Line-Verrechung erfolgt.

3. Verfahren nach Anspruch 1 oder 2, bei dem
die Gebühren abhängig von der übermittelten Datenmenge oder Anzahl der übermittelten Datenpakete verrechnet werden.

4. Verfahren nach einem der vorhergehenden Ansprüche, bei dem
die sendende und/oder die empfangende Kommunikationseinrichtung direkt mit einem Funknetz, insbesondere einem Mobilfunknetz kommuniziert, welches vorzugsweise auch leitungsvermittelte Verbindungen herstellt.

5. Verfahren nach einem der vorhergehenden Ansprüche, bei dem
der Paketdaten übermittelnde Teil des Kommunikationssystems ein Paketdatennetz ist, insbesondere das Internet.

6. Verfahren nach einem der vorhergehenden Ansprüche, bei dem
Funktionen eines Paketnetzes auf Funktionen eines leitungsvermittelten Netzes und/oder umgekehrt abgebildet werden.

7. Verfahren nach einem der vorhergehenden Ansprüche, bei dem
zur Gebührenverrechnung eine Gebührenanpassungs-Einrichtung, insbesondere ein Gebührenanpassungs-Server (CMS), verwendet wird.

8. Verfahren nach Anspruch 7, bei dem
der Gebührenanpassungs-Server (CMS) als Bindeglied von Funktionen und Einrichtungen eines leitungsvermittelten Netzes, insbesondere Mobilfunknetzes, und von Funktionen und Einrichtungen eines Paketdatennetzes, insbesondere des Internets, verwendet wird, wobei insbesondere Vergebührungsfunktionen eines leitungsvermittelten Netzes erhalten werden können und durch Einführung des Gebührenanpassungs-Servers (CMS) für ein Paketnetz erweitert werden.

9. Verfahren nach einem der vorhergehenden Ansprüche, bei dem
in Zugangsnetzknoten (GSN) eines Paketdatennetzes Internet-Protokoll-(IP)-basierte Protokolle anstelle des Common Channel Signaling Systems No. 7 (CCSNo7) verwendet werden.

10. Verfahren nach Anspruch 9, bei dem
die IP-basierte Schnittstelle das IP-Backbone (1), ein O&M-Netzwerk (2) oder ein File Transfer Protokoll (FTP - warm billing) ist.

11. Verfahren nach einem der vorhergehenden Ansprüche, bei dem ein Gebührenanpassungs-Server (CMS) an existierende Schnittstellen des Paketnetzes angeschlossen wird, wo dieser eine Protokollumsetzung auf die entsprechende Schnittstelle des leitungsvermittelten Vorausbezahlungssystems durchführt.

12. Verfahren nach einem der vorhergehenden Ansprüche, bei dem eine GSM-CAMEL-Schnittstelle vom Dienstenetzknoten (SGSN) auf einen Gebührenanpassungs-Server (CMS) verlagert wird.

13. Verfahren nach einem der Ansprüche 8, 11 oder 12, bei dem
die Tarifdaten für leitungsvermittelte und/oder paketvermittelte Dienste (CS bzw. PO) vorzugsweise nur im Gebührenanpassungs-Server (CMS) abgespeichert werden.

14. Verfahren nach einem der Ansprüche 8 oder 11 - 13, bei dem Vorausbezahlungsteilnehmer über Subscription-Daten im Heimatregister (HLR), Dienstenetzknoten (SGSN) und/oder im Abrechnungsserver (SCP) gekennzeichnet sind und nur deren Datensätze an den Gebührenanpassungs-Server (CMS) übertragen werden.

15. Verfahren nach einem der vorhergehenden Ansprüche, bei dem die Datenübermittlung bei einer Kontenlimitunterschreitung unterbrochen wird und vorzugsweise die Dienstleistungsberechtigung entzogen wird.

16. Funk-Kommunikationssystem zum Ausführen eines Verfahrens nach einem der vorhergehenden Ansprüche.

Fig. 1

**Fig. 2**

Fig. 3